# EUROPEAN PATENT SPECIFICATION

(11) **EP 3 643 957 B1**
(45) Date of publication and mention of the grant of the patent: **20.04.2022**
(21) Application number: 19204559.9
(22) Date of filing: 22.10.2019
(51) Int. Cl.: F16M 11/10, F16M 11/18, F16M 11/28, F16M 11/42

(54) **LIFTABLE SCREEN STAND**
ANHEBBARER SIEBSTÄNDER
SUPPORT D'ÉCRAN SOULEVABLE

(30) Priority: 26.10.2018 TW 107137908
(43) Date of publication of application: 29.04.2020
(73) Proprietor: Chartmate Inc., Kaohsiung City (TW)
(72) Inventor: LEE, Mong-Yu, KAOHSIUNG CITY (TW); LEE, Chi-Jun, KAOHSIUNG CITY (TW)
(74) Representative: Meyer-Dulheuer MD Legal Patentanwälte PartG mbB

(56) References cited:
- TW-U- M 472 207
- US-A1- 2004 004 165
- US-A1- 2015 159 804
- US-B1- 9 188 278

## Description

### 1. Field of the Invention

The present invention relates to a screen stand, and more particularly to a liftable screen stand that can lift an LCD monitor to a higher position with an elevating device and can reduce the cost of use.

### 2. Description of Related Art

The size of a liquid-crystal display (LCD) monitor is getting bigger with the advance of modern technology. To fix and adjust a position of the LCD monitor, the LCD monitor is often mounted on a conventional screen stand. The conventional screen stand has a pneumatic cylinder and an assembling device. The pneumatic cylinder is mounted within the conventional screen stand, and the assembling device is mounted to the pneumatic cylinder. The LCD monitor is mounted to the assembling device. By operating the pneumatic cylinder, the assembling device can ascend to a higher position or descend to a lower position. The position of the LCD monitor can be adjusted thereby.

The pneumatic cylinder of the conventional screen stand can only pull the assembling device to a height of 100 centimeters (cm) above a ground. If the size of the LCD monitor is too big, a lower part of the LCD monitor may not be seen due to the limited height lifting range of the pneumatic cylinder. To increase the height lifting range of the pneumatic cylinder, bigger capacity for gas is needed. It takes complex technique and costs too much to make a pneumatic cylinder with bigger capacity for gas. Overall, it costs too much to make a conventional screen stand with a pneumatic cylinder with a larger height lifting range. In addition, other conventional screen stands are also disclosed in US 2004/004165A1 and TW M472202 U.

The main objective of the present invention is to provide a liftable screen stand that can lift an LCD monitor to a higher position without having to cost much.

The liftable screen stand in accordance with the present invention has a base assembly, an elevating device, and an assembling device. The elevating device is mounted on the base assembly and has a hollow guiding tube, an elevating tube, a hollow supporting tube, a pedal seat, a pedal, a pushing rod, and a pneumatic cylinder. The guiding tube is mounted on the base assembly and has an interior and an outer surface. The elevating tube is mounted to the guiding tube, and is movable along the guiding tube. The supporting tube is mounted on the base assembly, is disposed in the interior of the guiding tube, and has an interior. The pedal seat is mounted in a lower half of the base assembly.

The pedal is pivotably mounted on the pedal seat and has a passive portion and a pedalled portion. The passive portion is disposed at an end of the pedal and is below the supporting tube. The pedalled portion is connected to the passive portion and is located at an exterior of the base assembly. The pushing rod is disposed in the interior of the supporting tube, is connected to the supporting tube, passes through the base assembly and abuts against the pedal. The pneumatic cylinder is mounted to an inner top surface of the elevating tube, is disposed in the interior of the guiding tube, and has a gas spring, an activating valve, and an elevatable tube. The gas spring is fixed at a top of the supporting tube. The activating valve is mounted at a bottom of the gas spring. The elevatable tube is movably mounted to the gas spring and has a top end fixed on the inner top surface of the elevating tube that can be moved up and down along the guiding tube. The assembling device is mounted to the elevating tube of the elevating device and is at a top of the elevating tube. Preferably, the assembling device has an assembling frame which can be rotated and locked at an arbitrary angle.

Other objectives, advantages and novel features of the invention will become more apparent from the following detailed description when taken in conjunction with the accompanying drawings.

### IN THE DRAWINGS:

Fig. 1 is a perspective view of a first embodiment of a liftable screen stand in accordance with the present invention;
Fig. 2 is an exploded perspective view of the liftable screen stand in Fig.1;
Fig. 3 is a front side view of the liftable screen stand in Fig.1;
Fig. 4 is a side view in partial section of the liftable screen stand along a line 4-4 in Fig. 3;
Fig. 5 is an operational side view in partial section of the liftable screen stand along the line 4-4 in Fig. 3, showing a lifted status of the liftable screen stand;
Fig. 6 is a cross-sectional top side view of the liftable screen stand along a line 6-6 in Fig. 4;
Fig. 7 is an enlarged cross-sectional top side view of the liftable screen stand along the line 6-6 in Fig. 6;
Fig. 8A is a front side view of a second embodiment of a liftable screen stand in accordance with the present invention, omitting an assembling frame of an assembling device of the liftable screen stand;
Fig. 8B is a side view of the liftable screen stand in Fig. 8A; and
Fig. 9 is a side view in partial section of the liftable screen stand in Fig. 8A of the second embodiment, wherein internal and external positions of a guiding tube and an elevating tube are interchanged relative to the first embodiment of the present invention.

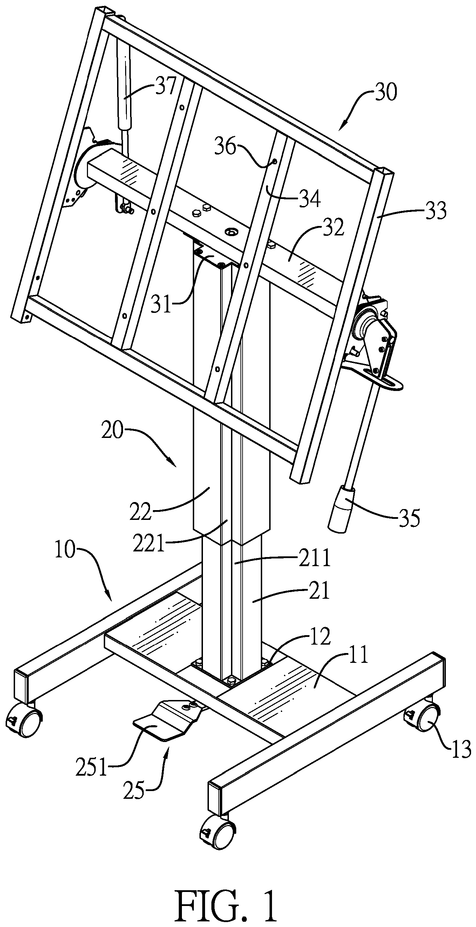

With reference to Figs. 1 to 3, a first embodiment of a liftable screen stand in accordance with the present invention comprises a base assembly 10, an elevating device 20, and an assembling device 30.

With reference to Figs. 1 to 3, the base assembly 10 has a base 11, a fixing board 12, and four wheels 13. The fixing board 12 is mounted on the base 11. The fixing board 12 can be fixed on the base 11 by fastening four screws through the fixing board 12 onto the base 11, which provides stability to the fixing board 12. The four wheels 13 are mounted separately on a bottom of the base 11 and arranged in a matrix. The four wheels 13 enable the base 11 to move, which enhances the mobility of the present invention.

With reference to Figs. 1 to 3 and 6, the elevating device 20 is mounted on the base assembly 10 and has a guiding tube 21, an elevating tube 22, a supporting tube 23, a pedal seat 24, a pedal 25, a pushing rod 26, and a pneumatic cylinder 27. The guiding tube 21 is hollow, is mounted on the fixing board 12 of the base assembly 10, and has an interior, an outer surface, and multiple first caved portions 211. The multiple first caved portions 211 are disposed on the outer surface of the guiding tube 21 at equi-angular intervals. The guiding tube 21 can be fixed on the fixing board 12 by fastening eight screws through the base 11 and the fixing board 12 to a bottom of the guiding tube 21. By fastening the eight screws, the guiding tube 21 is fixed on the fixing board 12 firmly.

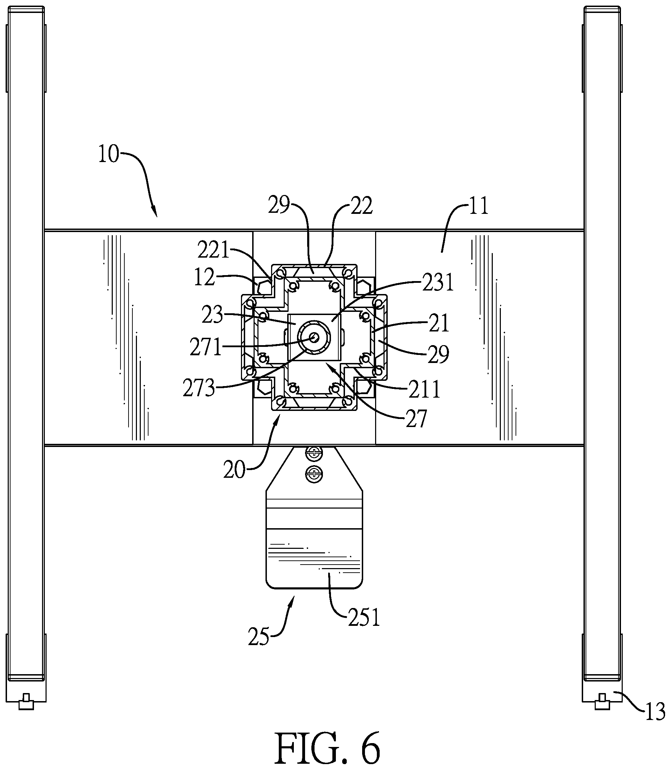

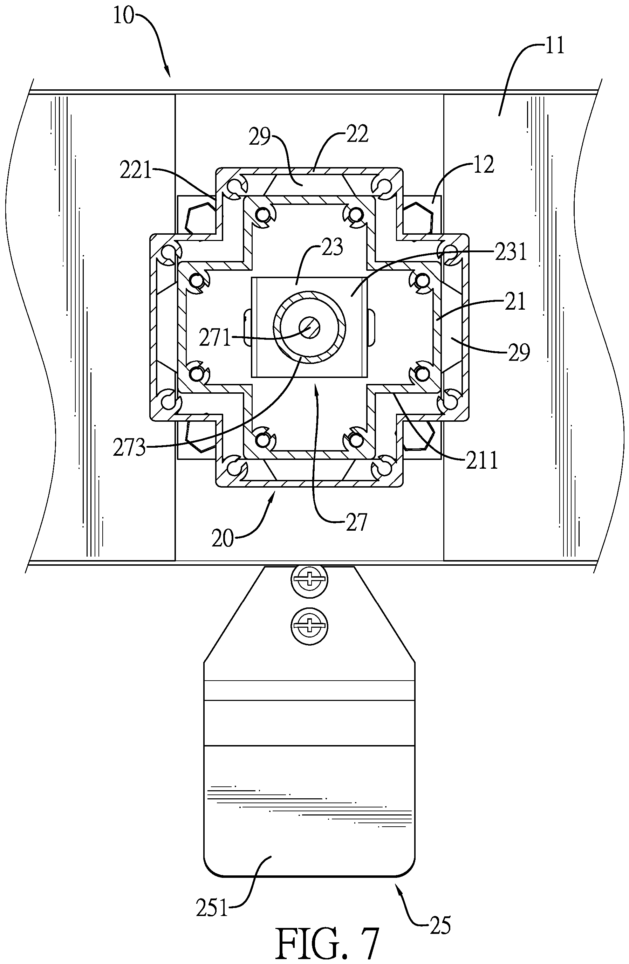

The elevating tube 22 is mounted to the guiding tube 21, is movable along the guiding tube 21, and has an outer surface and multiple second caved portions 221. The multiple second caved portions 221 are disposed on the outer surface of the elevating tube 22 at equi-angular intervals. Each one of the multiple second caved portions 221 is disposed to a respective one of the multiple first caved portions 211 of the guiding tube 21. As shown in Figs. 6 and 7, cross-sections of the guiding tube 21 and the elevating tube 22 are in the shape of a crisscross, which reduces the stress born by the guiding tube 21 and the elevating tube 22 when stricken, and enhances the structural strength of the guiding tube 21 and the elevating tube 22. In this way, the cost of the material of the guiding tube 21 and the elevating tube 22 also reduces due to smaller thickness needed to manufacture the guiding tube 21 and the elevating tube 22.

The supporting tube 23 is hollow, is mounted on the fixing board 12 of the base assembly 10, is disposed in the interior of the guiding tube 21, and has an interior. Furthermore, the supporting tube 23 has a cover 231 mounted at a top of the supporting tube 23.

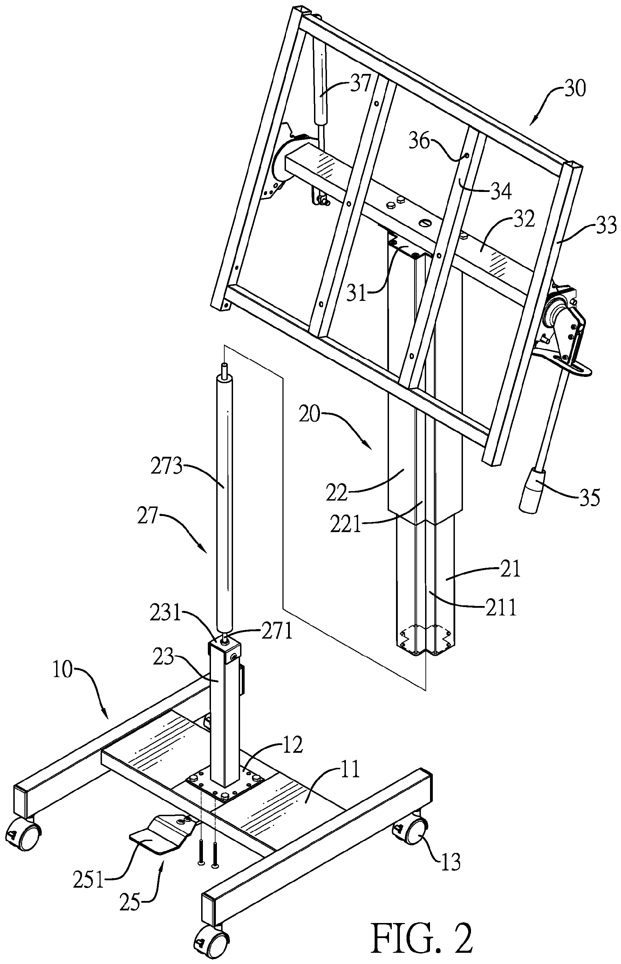

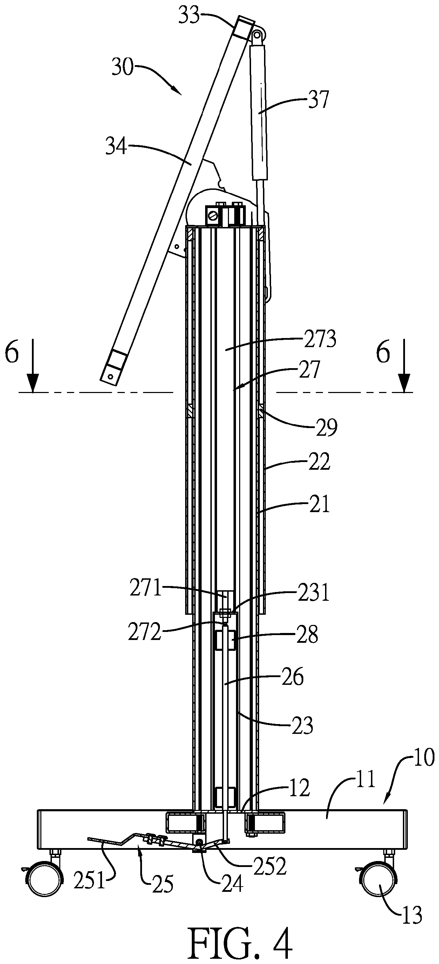

As shown in Fig. 4, the pedal seat 24 is mounted in a lower half of the base 11 of the base assembly 10. The pedal 25 is pivotably mounted on the pedal seat 24 and has a passive portion 252 and a pedalled portion 251. The passive portion 252 is disposed at an end of the pedal 25, is pivotably mounted on the pedal seat 24, and is disposed below the supporting tube 23. As shown in Figs. 2 and 4, the pedalled portion 251 is connected to the passive portion 252 and is located at an exterior of the base 11 of the base assembly 10. The pushing rod 26 is disposed in the interior of the supporting tube 23, is connected to the supporting tube 23, passes through the fixing board 12, and abuts against the passive portion 252 of the pedal 25.

The pneumatic cylinder 27 is mounted to an inner top surface of the elevating tube 22 and is disposed in the interior of the guiding tube 21. The pneumatic cylinder 27 has a gas spring 271, an activating valve 272, and an elevatable tube 273. The gas spring 271 is fixed at the cover 231 of the supporting tube 23. The activating valve 272 is mounted at a bottom of the gas spring 271. The elevatable tube 273 is movably mounted to the gas spring 271 and has a top end. The top end of the elevatable tube 273 is fixed on the inner top surface of the elevating tube 22.

Moreover, as shown in Figs. 4, 6, and 7, the elevating device 20 has at least one fixing element 28 and multiple stabilizing elements 29. The at least one fixing element 28 is disposed in the interior of the supporting tube 23, and the pushing rod 26 passes through the at least one fixing element 28. The at least one fixing element 28 surrounds the pushing rod 26 in the supporting tube 23 and prevents the pushing rod 26 from hitting against the supporting tube 23. The multiple stabilizing elements 29 are disposed on the outer surface of the guiding tube 21 and abut against an inner surface of the elevating tube 22, so that the elevating tube 22 moves along the guiding tube 21 smoothly and stably. The multiple stabilizing elements 29 also enhance the structural strength of the elevating device 20.

With reference to Figs. 1 to 3, the assembling device 30 is mounted to the elevating tube 22 of the elevating device 20 and is located at a top of the elevating tube 22. The assembling device 30 has a fastening board 31, an assembling bar 32, an assembling frame 33, two mounting elements 34, an angle-adjusting handle 35, and at least one dashpot 37. The fastening board 31 is mounted to the top of the elevating tube 22. The assembling bar 32 is mounted on the fastening board 31. The assembling frame 33 is pivotably mounted to the assembling bar 32.

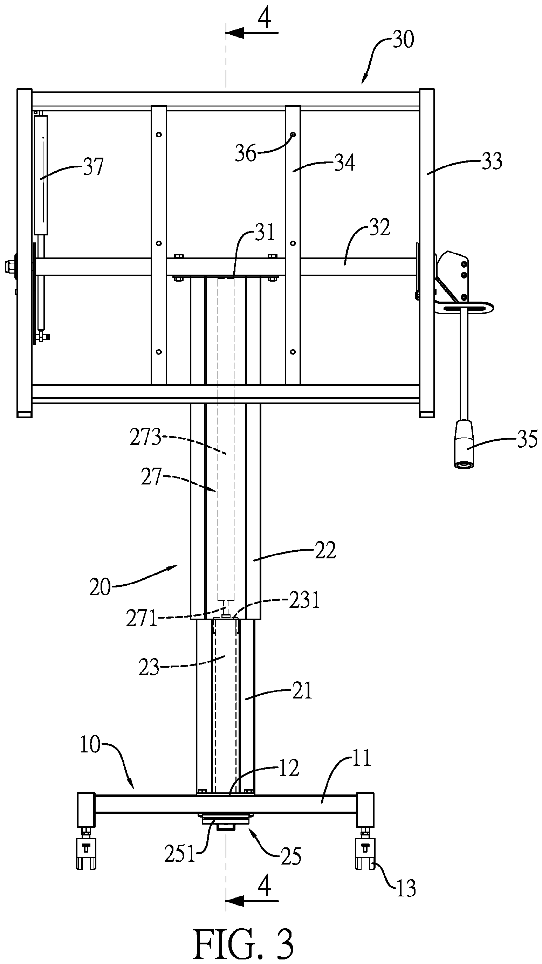

The assembling frame 33 has two mounting bars disposed at a spaced interval on the assembling frame 33. The two mounting elements 34 are mounted to the two mounting bars of the assembling frame 33, are disposed in an inner side of the assembling frame 33, and are disposed at a spaced interval. Each one of the two mounting elements 34 has multiple mounting holes 36. The multiple mounting holes 36 are disposed on one of the two mounting elements 34 and are at spaced intervals with one another. Different ones of the mounting holes 36 are selected according to the size of an LCD monitor that is to be mounted on the assembling frame 33. With reference to Fig. 3, if the size of the LCD monitor is small, four of the multiple mounting holes 36 adjacent to each other are chosen for mounting the LCD monitor. If the size of the LCD monitor is large, the two mounting holes 36 on an upper side and the two mounting holes 36 on a lower side are chosen for mounting the LCD monitor. The angle-adjusting handle 35 is pivotably mounted to the assembling bar 32, is mounted to the assembling frame 33, and is located at a side of the assembling frame 33. Each of the at least one dashpot 37 has two ends. One of the two ends of the dashpot 37 is mounted to the assembling frame 33, and the other one of the two ends of the dashpot 37 is mounted to the assembling bar 32.

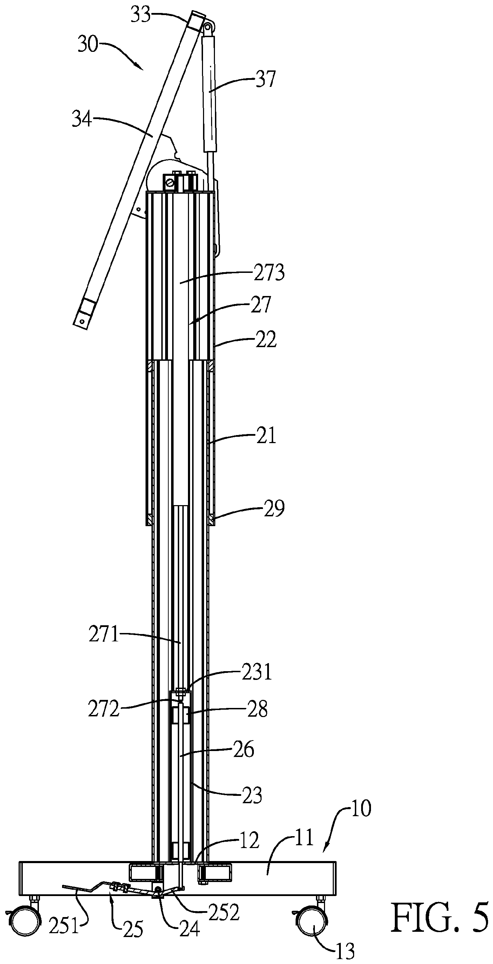

As shown in Figs. 2, 3, and 5, when it is necessary to adjust an angle of the frame 33, hold the angle-adjusting handle 35 and pivot the angle-adjusting handle 35 relative to the assembling bar 32. Then the assembling frame 33 pivots relative to the assembling bar 32 as well. When the assembling frame 33 is pivoting, the at least one dashpot 37 provides the assembling frame 33 with a damping effect. The damping effect prevents an LCD frame from striking the assembling frame 33 while the LCD frame and the assembling frame 33 are pivoting. When the assembling frame 33 is horizontal, it can be utilized as a conference table or a drawing desk. People can gather around the LCD monitor for discussion. When the assembling frame 33 is vertical, the LCD monitor can be used for announcement or advertising. The assembling device 30 for fixing the LCD monitor or the like is characterized in that the assembling frame 33 is fixed above the elevating tube 22 so that the LCD monitor can be fixed, and preferably an angle can be adjusted.

With reference to Figs. 2, 4 and 5, the LCD monitor can be mounted to the multiple mounting holes 36 of the two mounting elements 34. To lift the LCD monitor, pedal the pedalled portion 251 of the pedal 25, and then the pedalled portion 251 descends and the passive portion 252 ascends. Ascending, the passive portion 252 pushes the pushing rod 26 upwardly. Then the pushing rod 26 pushes the activating valve 272 of the pneumatic cylinder 27. Being activated, the activating valve 272 makes the elevatable tube 273 move upwardly relative to the gas spring 271. As the top end of the elevatable tube 273 is fixed on the inner top surface of the elevating tube 22, the elevating tube 22 elevates as well. Being mounted to the elevating tube 22, the assembling device 30 rises to a higher position.

When the assembling device 30 rises to a desired position, stop pedaling the pedalled portion 251. Then the elevatable tube 273, the elevating tube 22, and the assembling device 30 stop moving and are positioned at the desired position. The position of the LCD monitor can be lifted thereby. To lower the position of the LCD monitor, pedal the pedalled portion 251. Then the passive portion 252 pushes the pushing rod 26 upwardly and the pushing rod 26 activates the activating valve 272. At the same time, press the LCD monitor or the assembling device 30 downwardly until the LCD monitor reaches a desired position. Then stop pedaling the pedalled portion 251. Overall, the elevating tube 22 and the assembling device 30 can move upwardly or downwardly by pedaling the pedalled portion 251 of the pedal 25. The liftable screen stand in accordance with the present invention can lift the LCD monitor to a higher or a lower position quickly and conveniently.

The supporting tube 23 and the pushing rod 26 lift an initial position of the pneumatic cylinder 27. So the pneumatic cylinder 27, the elevating tube 22, and the assembling device 30 can reach a higher height than that of the pneumatic cylinder and the assembling device of the conventional screen stand. The LCD monitor mounted on the present invention can reach a higher height than that of the LCD monitor mounted on the conventional screen stand as well. Therefore, the LCD monitor of a big size can be mounted on the liftable screen stand without being blocked from sight, and the whole screen can be watched clearly. Overall, the assembling device 30 and the LCD monitor can reach a higher position by the supporting tube 23 and the pushing rod 26 without using a pneumatic cylinder with a larger height lifting range, which lowers the cost.

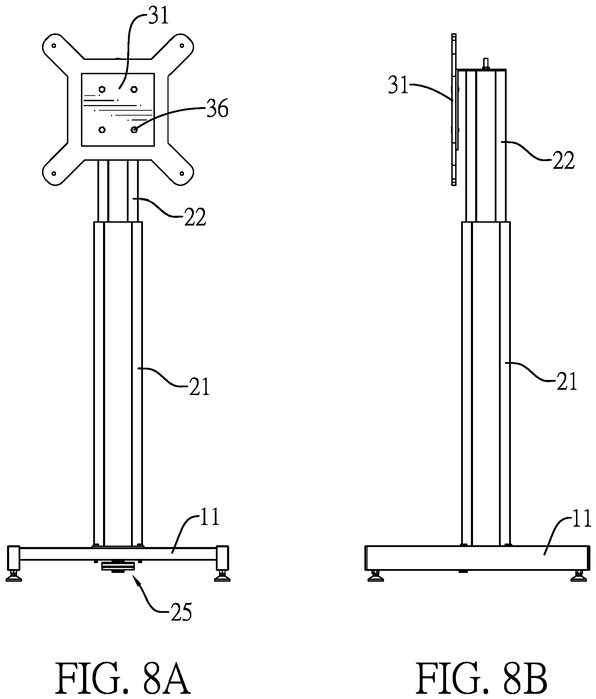

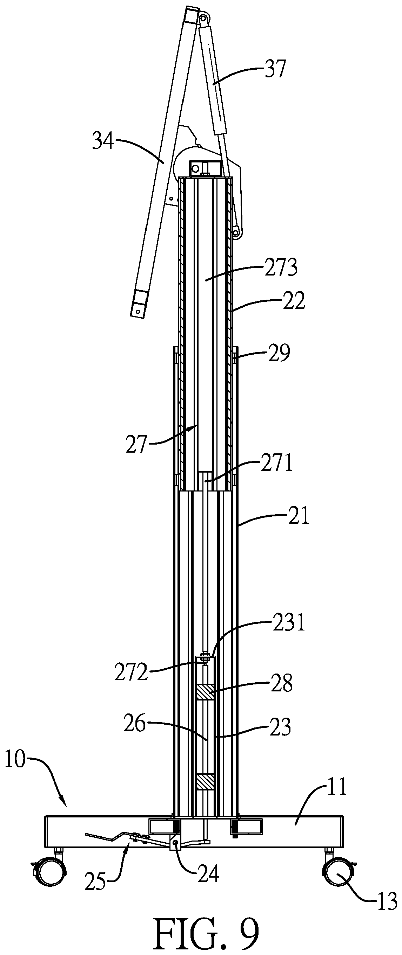

With reference to Figs. 8A, 8B, and 9, a second embodiment of a liftable screen stand in accordance with the present invention is substantially the same as the first embodiment except for the following features. The assembling frame 33 may be directly attached to the fastening board 31 provided on the top of the elevating tube 22 without using the assembling frame 33 by using an attachment device as an accessory part of the LCD monitor.

Furthermore, in the second embodiment of the present invention, the fastening board 31 for fixing the LCD monitor is shown for the purpose of reducing the cost by omitting the assembling frame 33. The mounting holes 36 are provided in a substantially vertical surface of the L-shaped fastening board 31 attached to the top of the elevating tube 22 with a simple configuration in which the assembling bar 32 of the assembling frame 33 is omitted, and the angle-adjusting handle 35 is not attached. It is configured to be directly attached to the LCD monitor.

Additionally, in the first embodiment of the present invention, the elevating tube 22 is disposed outside the guiding tube 21. However, depending on the implementation, the elevating tube 22 and its related components and the inside and outside of the guiding tube 21 in an inverted position are used and can be replaced. That is, with reference to Fig. 9, in the elevating device 20 of the second embodiment of the present invention, unlike the elevating device 20 in the first embodiment as shown in Figs. 1 to 7, the inside and outside of the guiding tube 21 and the elevating tube 22 are interchanged. The same reference numerals are used for components having the same functions as those in the first embodiment of the present invention, and the description of the configuration is as described above except that the positions are changed.

## Claims

1. A liftable screen stand, **characterized in that** the liftable screen stand comprises:
a base assembly (10);
an elevating device (20) mounted on the base assembly (10) and having
a guiding tube (21) being hollow, mounted on the base assembly (10), and having
an interior; and
an outer surface;
an elevating tube (22) mounted to the guiding tube (21) and being movable along the guiding tube (21);
a supporting tube (23) being hollow, mounted on the base assembly (10), disposed in the interior of the guiding tube (21), and having
an interior; and
a cover (231) mounted at a top of the supporting tube (23);
a pedal seat (24) mounted in a lower half of the base assembly (10);
a pedal (25) pivotably mounted on the pedal seat (24) and having
a passive portion (252) disposed at an end of the pedal (25) and disposed below the supporting tube (23); and
a pedalled portion (251) connected to the passive portion (252) and located at an exterior of the base assembly (10);
a pushing rod (26) disposed in the interior of the supporting tube (23), passing through the base assembly (10), and abutting against the passive portion (252) of the pedal (25); and
a pneumatic cylinder (27) mounted to an inner top surface of the elevating tube (22), disposed in the interior of the guiding tube (21), and having
a gas spring (271) fixed at the cover (231) of the supporting tube (23);
an activating valve (272) mounted at a bottom of the gas spring (271); and
an elevatable tube (273) movably mounted to the gas spring (271) and having
a top end fixed on the inner top surface of the elevating tube (22); and
an assembling device (30) for supporting a screen mounted to the elevating tube (22) of the elevating device (20) and being at a top of the elevating tube (22);
wherein to lift the screen stand, the pedaled portion (251) is pushed in a downward direction for the passive portion (252) to push the pushing rod (26) upwardly, and the pushing rod (26) then pushes the activating valve (272) of the pneumatic cylinder (27) to move the elevating tube (273) upwardly for rising the assembling device (30) to a higher position.

2. The liftable screen stand as claimed in claim 1, wherein the elevating device (20) has at least one fixing element (28) disposed in the interior of the supporting tube (23), and the pushing rod (26) passes through the at least one fixing element (28).

3. The liftable screen stand as claimed in claim 1, wherein the assembling device (30) has
a fastening board (31) mounted to the top of the elevating tube (22);
an assembling bar (32) mounted on the fastening board (31);
an assembling frame (33) pivotably mounted to the assembling bar (32);
two mounting elements (34) mounted to the assembling frame (33), disposed in an inner side of the assembling frame (33), and each one of the two mounting elements (34) having multiple mounting holes (36) disposed at spaced intervals with one another;
an angle-adjusting handle (35) pivotably mounted to the assembling bar (32) and located at a side of the assembling frame (33); and
at least one dashpot (37) mounted to the assembling frame (33) and the assembling bar (32).

4. The liftable screen stand as claimed in claim 1, wherein
the base assembly (10) has
a base (11); and
a fixing board (12) mounted on the base (11);
the guiding tube (21) is mounted on the fixing board (12) of the base assembly (10); and
the pushing rod (26) is disposed in the interior of the supporting tube (23), passes through the fixing board (12) of the base assembly (10), and abuts against the passive portion (252) of the pedal (25).

5. The liftable screen stand as claimed in claim 4, wherein the fixing board (12) is fixed on the base (10) by fastening four screws through the fixing board (12) onto the base (10), and the guiding tube (21) is fixed on the fixing board (12) by fastening eight screws through the base (10) and the fixing board (12) to a bottom of the guiding tube (21).

6. The liftable screen stand as claimed in claim 1, wherein
the guiding tube (21) has multiple first caved portions (211) disposed on the outer surface of the guiding tube (21) at equi-angular intervals; and
the elevating tube (22) has multiple second caved portions (221) disposed on an outer surface of the elevating tube (22) at equi-angular intervals, and each one of the multiple second caved portions (221) is disposed to a respective one of the multiple first caved portions (211) of the guiding tube (21).

7. The liftable screen stand as claimed in claim 1, wherein the elevating device (20) has multiple stabilizing elements (29) disposed on the outer surface of the guiding tube (21) and abutting against an inner surface of the elevating tube (22).

8. The liftable screen stand as claimed in claim 1, wherein the base assembly (10) has four wheels (13) mounted separately on a bottom of the base (13) and arranged in a matrix.

## Patentansprüche

1. Anhebbarer Bildschirmständer, **dadurch gekennzeichnet, dass** der anhebbare Bildschirmständer umfasst:
eine Sockelbaugruppe (10);
eine Hebevorrichtung (20), die an der Sockelbaugruppe (10) angebracht ist und aufweist:
ein Führungsrohr (21), das hohl ist, an der Sockelbaugruppe (10) angebracht ist und aufweist:
ein Inneres; und
eine Außenfläche;
ein Heberohr (22), das an dem Führungsrohr (21) angebracht ist und an dem Führungsrohr (21) entlang bewegbar ist;
ein Trägerrohr (23), das hohl ist, an der Sockelbaugruppe (10) angebracht ist, im Inneren des Führungsrohrs (21) angebracht ist und aufweist:
ein Inneres; und
eine Abdeckung (231), die an einer Oberseite des Trägerrohrs (23) angebracht ist;
einen Pedalsitz (24), der in einer unteren Hälfte der Sockelbaugruppe (10) angebracht ist;
ein Pedal (25), das schwenkbar an dem Pedalsitz (24) angebracht ist und aufweist:
einen passiven Abschnitt (252), der an einem Ende des Pedals (25) und unter dem Trägerrohr (23) angeordnet ist; und
einen betätigten Abschnitt (251), der mit dem passiven Abschnitt (252) verbunden und auf einer Außenseite der Sockelbaugruppe (10) angeordnet ist,
eine Schubstange (26), die im Inneren des Trägerrohrs (23) angeordnet ist, durch die Sockelbaugruppe (10) verläuft und an dem passiven Abschnitt (252) des Pedals (25) anliegt; und
einen Pneumatikzylinder (27), der an einer inneren oberen Oberfläche des Heberohrs (22) angebracht ist, im Inneren des Führungsrohrs (21) angeordnet ist und aufweist:
eine Gasfeder (271), die an der Abdeckung (231) des Trägerrohrs (23) fixiert ist;
ein Aktivierungsventil (272), das an einer Unterseite der Gasfeder (271) angebracht ist; und
ein hebbares Rohr (273), das bewegbar an der Gasfeder (271) angebracht ist und aufweist:
ein oberes Ende, das an der inneren oberen Oberfläche des Heberohrs (22) fixiert ist; und
eine Montagevorrichtung (30) zum Tragen eines Bildschirms, der an dem Heberohr (22) der Hebevorrichtung (20) angebracht ist und sich an einer Oberseite des Heberohrs (22) befindet;
wobei zum Anheben des Bildschirmständers der betätigte Abschnitt (251) herabgedrückt wird, damit der passive Abschnitt (252) die Schubstange (26) aufwärts drückt und die Schubstange (26) daraufhin das Aktivierungsventil (272) des Pneumatikzylinders (27) drückt, um das hebbare Rohr (273) nach oben zu bewegen, um die Montagevorrichtung (30) in eine höhere Position anzuheben.

2. Anhebbarer Bildschirmständer nach Anspruch 1, wobei die Hebevorrichtung (20) wenigstens ein Fixierelement (28) aufweist, das im Inneren des Trägerrohrs (23) angeordnet ist und die Schubstange (26) durch das wenigstens eine Fixierelement (28) verläuft.

3. Anhebbarer Bildschirmständer nach Anspruch 1, wobei die Montagevorrichtung (30) aufweist:
eine Befestigungsplatte (31), die an der Oberseite des Heberohrs (22) angebracht ist;
einen Montageschiene (32), die an der Befestigungsplatte (31) angebracht ist;
einen Montagerahmen (33), der schwenkbar an der Montageschiene (32) angebracht ist;
zwei Montageelemente (34), die an dem Montagerahmen (33) angebracht und auf einer Innenseite des Montagerahmens (33) angeordnet sind, wobei jedes der zwei Montageelemente (34) mehrere Montagelöcher (36) aufweist, die in Abständen zueinander angeordnet sind;
einen Winkelverstellgriff (35), der schwenkbar an der Montageschiene (32) angebracht und auf einer Seite des Montagerahmens (33) angeordnet ist; und
wenigstens einen Dämpfer (37), der an dem Montagerahmen (33) und der Montageschiene (32) angebracht ist.

4. Anhebbarer Bildschirmständer nach Anspruch 1, wobei die Sockelbaugruppe (10) aufweist:
einen Sockel (11); und
eine Fixierungsplatte (12), die an dem Sockel (11) angebracht ist;
wobei das Führungsrohr (21) an der Fixierungsplatte (12) der Sockelbaugruppe (10) angebracht ist; und
die Schubstange (26) im Inneren des Trägerrohrs (23) angeordnet ist, durch die Fixierungsplatte (12) der Sockelbaugruppe (10) verläuft und am passiven Abschnitt (252) des Pedals (25) anliegt.

5. Anhebbarer Bildschirmständer nach Anspruch 4, wobei die Fixierungsplatte (12) durch Befestigen von vier Schrauben durch die Fixierungsplatte (12) hindurch am Sockel (10 an dem Sockel (10) fixiert ist und das Führungsrohr (21) durch Befestigen von acht Schrauben durch den Sockel (10) und die Fixierungsplatte (12) hindurch an einer Unterseite des Führungsrohrs (21) an der Fixierungsplatte (21) fixiert ist.

6. Anhebbarer Bildschirmständer nach Anspruch 1, wobei das Führungsrohr (21) mehrere erste vertiefte Abschnitte (211) aufweist, die in gleichen Winkelabständen an der Außenfläche des Führungsrohrs (21) angeordnet sind; und
das Heberohr (22) mehrere zweite vertiefte Abschnitte (221) aufweist, die in gleichen Winkelabständen an einer Außenfläche des Heberohrs (22) angeordnet sind, wobei je einer der mehreren zweiten vertieften Abschnitte (221) für einen jeweiligen der mehreren ersten vertieften Abschnitte (211) des Führungsrohrs (21) angeordnet ist.

7. Anhebbarer Bildschirmständer nach Anspruch 1, wobei die Hebevorrichtung (20) mehrere Stabilisierungselemente (29) aufweist, die an der Außenfläche des Führungsrohrs (21) angeordnet sind und an einer Innenfläche des Heberohrs (22) anliegen.

8. Anhebbarer Bildschirmständer nach Anspruch 1, wobei die Sockelbaugruppe (10) vier Räder (13) aufweist, die separat an einer Unterseite des Sockels (13) angebracht und in einer Matrix angeordnet sind.

## Revendications

1. Un support d'écran inclinable, **caractérisé en ce que** le support d'écran inclinable comprend :
un ensemble de base (10);
un dispositif d'élévation (20) monté sur l'ensemble de base (10) et muni d'un tube de guidage (21) étant creux, monté sur l'ensemble de base (10), et muni d'un intérieur; et
une surface extérieure;
un tube d'élévation (22) monté sur le tube de guidage (21) et étant déplaçable le long du tube de guidage (21);
un tube de soutien (23) étant creux, monté sur l'ensemble de base (10), placé à l'intérieure du tube de guidage (21), et muni d'un intérieur; et
un couvercle (231) monté sur le haut du tube de soutien (23);
une embase de pédale (24) montée à la partie inférieure de l'ensemble de base (10);
une pédale (25) montée de façon rotative sur l'embase de pédale (24) et munie d'une partie passive (252) placée à une extrémité de la pédale (25) et placée en-dessous du tube de support (23); et
une partie à pédale (251) connectée à la partie passive (252) et située à l'extérieur de l'ensemble de base (10);
une tige de poussée (26) placée à l'intérieur du tube de soutien (23), passant à travers l'ensemble de base (10), et étant accolée contre la partie passive (252) de la pédale (25); et
un cylindre pneumatique (27) monté sur une surface supérieure interne du tube d'élévation (22), placé à l'intérieur du tube de guidage (21), et muni d'un ressort à gaz (271) fixé au couvercle (231) du tube de soutien (23);
d'une vanne d'activation (272) montée au bas du ressort à gaz (271); et
un tube pouvant être élevé (273) monté de façon mobile sur le ressort à gaz (271) et muni d'une extrémité supérieure fixée sur la surface supérieure interne du tube d'élévation (22); et
un dispositif d'assemblage (30) pour soutenir un écran monté sur le tube d'élévation (22) du dispositif d'élévation (20) et étant sur le haut du tube d'élévation (22);
dans lequel afin d'élever le support d'écran, la partie à pédale (251) est poussée vers le bas de sorte que la partie passive (252) pousse la tige de poussée (26) vers le haut, et que la tige de poussée (26) pousse ensuite la vanne d'activation (272) du cylindre pneumatique (27) pour déplacer le tube d'élévation (273) vers le haut afin d'élever le dispositif d'assemblage (30) à une position plus élevée.

2. Un support d'écran inclinable selon la revendication 1, dans lequel le dispositif d'élévation (20) est muni d'au moins un élément de fixation (28) placé à l'intérieur du tube de soutien (23), et la tige de poussée (26) passe à travers le au moins un élément de fixation (28).

3. Un support d'écran inclinable selon la revendication 1, dans lequel le dispositif d'assemblage (30) est muni d'une plaque de fixation (31) montée sur le haut du tube d'élévation (22);
d'une barre d'assemblage (32) montée sur la plaque de fixation (31);
d'un cadre d'assemblage (33) monté de façon rotative sur la barre d'assemblage (32);
de deux éléments de montage (34) montés sur le cadre d'assemblage(33), placés sur une face interne du cadre d'assemblage (33), chacun des deux éléments de fixation (34) étant muni de multiples trous de montage (36) placés par intervalles mutuellement distants;
d'une poignée d'ajustement d'angle (35) montée de façon rotative sur la barre d'assemblage (32) et située sur un côté du cadre d'assemblage (33); et
au moins un amortisseur (37) monté sur le cadre d'assemblage (33) et la barre d'assemblage (32).

4. Un support d'écran inclinable selon la revendication 1, dans lequel l'ensemble de base (10) est muni d'une base (11); et
une plaque de fixation (12) est montée sur la base (11);
le tube de guidage (21) est monté sur la plaque de fixation (12) de l'ensemble de base (10); et
la tige de poussée (26) est placée à l'intérieur du tube de soutien (23) et passe à travers la plaque de fixation (12) de l'ensemble de base (10), et est accolée contre la partie passive (252) de la pédale (25).

5. Un support d'écran inclinable selon la revendication 4, dans lequel la plaque de fixation (12) est fixée sur la base (10) en serrant quatre vis à travers la plaque de fixation (12) sur la base (10), et le tube de guidage (21) est fixé sur la plaque de fixation (12) en serrant huit vis à travers la base (10) et la plaque de fixation (12) sur le fond du tube de guidage (21).

6. Un support d'écran inclinable selon la revendication 1, dans lequel le tube de guidage (21) est muni de multiples premières parties creuses (211) placées sur la surface externe du tube de guidage (21) à intervalles équiangulaires ; et
le tube d'élévation (22) est muni de multiples deuxièmes parties creuses (221) placées sur la surface externe du tube d'élévation (22) à intervalles équiangulaires, et chacune des multiples deuxièmes parties creuses (221) est placée de façon correspondante à l'une des multiples premières parties creuses (211) du tube de guidage (21).

7. Un support d'écran inclinable selon la revendication 1, dans lequel le dispositif d'élévation (20) est muni de multiples éléments de stabilisation (29) placés sur la surface externe du tube de guidage (21) et accolés contre la surface interne du tube d'élévation (22).

8. Un support d'écran inclinable selon la revendication 1, dans lequel l'ensemble de base (10) est muni de quatre roues (13) montée séparément sur le bas de la base (13) et agencés selon une matrice.
